# EUROPEAN PATENT SPECIFICATION

(11) **EP 3 000 925 B1**
(45) Date of publication and mention of the grant of the patent: **25.03.2020**
(21) Application number: 15183481.9
(22) Date of filing: 02.09.2015
(51) Int. Cl.: D06F 37/28

(54) **LAUNDRY TREATMENT HOUSEHOLD APPLIANCE WITH A COATED GLASS DOOR BOWL**
HAUSHALTSWÄSCHEWASCHMASCHINE MIT EINER BESCHICHTETEN GLASTÜRSCHALE
MACHINE DOMESTIQUE DE TRAITEMENT DU LINGE AVEC UN HUBLOT DE PORTE EN VERRE REVÊTU.

(30) Priority: 25.09.2014 ES 201431402
(43) Date of publication of application: 30.03.2016
(73) Proprietor: BSH Hausgeräte GmbH, 81739 München (DE)
(72) Inventor: Alaman Aguilar, Jorge, 50008 Zaragoza (ES); Anton Españaque, Maria Justina, 50013 Zaragoza (ES); Caparrós Ezpeleta, Miguel Javier, 50008 Zaragoza (ES); Ester Sola, Francisco Javier, 50001 Zaragoza (ES); Planas Layunta, Fernando, 50009 Zaragoza (ES)

(56) References cited:
- EP-A1- 0 738 694
- EP-A2- 2 551 601
- WO-A1-00/77564
- WO-A1-03/069044
- DE-A1- 4 304 009
- DE-A1-102004 015 081
- US-B1- 6 766 596

## Description

The invention relates to a household appliance for caring pieces of laundry, including a housing, in which a laundry drum is rotatably supported, wherein the laundry drum has an opening, through which pieces of laundry can be introduced into the laundry drum or can be removed from the laundry drum, comprising a door, which is disposed pivotably on the housing and for closing the opening, wherein the door has an at least translucent window, and comprising at least one light source, by means of which the window can be illuminated on the inside.

Such household appliance is disclosed in document DE 10 2004 015 081 A1.

Document DE 43 04 009 A1 discloses a household appliance for laundry care which includes a window that may carry an electrically conductive coating which may be manufactured from tin dioxide. U. S. Patent 6,766,596 discloses a household appliance for laundry care which includes a lid made from tempered glass. The lid has a coating which provides intransparence of the glass in parts not dedicated for looking to clothing placed in the appliance. Document WO 2003/069044 A1 also discloses a laundry care appliance with a partly transparent lid wherein a transparent part of the lid has a hydrophilic coating. Document EP 0 738 694 A1 relates to improving the durability of transparent thin coatings.

Household appliances for caring pieces of laundry such as for example a washing machine or a washer-dryer include a porthole-like door having a window glass, through which it can be looked into the laundry drum with the door closed.

In these configurations, therefore, permanent unrestricted look-through is allowed, namely both if pieces of laundry are contained in the laundry drum and if it is empty.

It is the object of the present invention to provide a household appliance for caring pieces of laundry, in which an optical characteristic of the door is improved.

This object is solved by a household appliance having the features according to claim 1.

A household appliance according to the invention for caring pieces of laundry comprises a housing, in which a laundry drum is rotatably supported, wherein the laundry drum has an opening, through which the pieces of laundry can be introduced into the laundry drum or can be removed from the laundry drum. The household appliance also comprises a door, which is disposed pivotably on the housing and for closing the opening, wherein the door has an at least translucent window. The household appliance further comprises at least one light source, by means of which the window can be illuminated on the inside. Further, a coating is applied on an outside of the window facing away from the laundry drum and/or on an inside of the window facing the laundry drum, wherein the translucency of the window is reduced at least in a non-illuminated state of the window by the coating.

According to the invention it is provided that the household appliance has at least one light source, by means of which the window can be illuminated on the inside such that the light source is correspondingly positionally disposed. By this configuration, the door can be individually illuminated, which is for example effected depending on a certain operating situation of the household appliance. For example, this can preferably be the case if the door is closed and a washing operation of the pieces of laundry to be cared is started.

The window with the coating is opaque with viewing direction to the outside with the light source turned off. Thereby, for example if the household appliance is not in operation and the door is closed, it cannot be looked into the laundry drum. Even if there is not a user's wish to look into the laundry drum through the window, this opaqueness is given by the coating.

The window with the coating is transparent with viewing direction to the outside with the light source turned on. Therefore, the coating is also formed such that it allows or prevents looking through depending on an explicit and defined illumination. Especially if the light source is activated and for example a washing operation proceeds, even with closed door, it can be looked into the laundry drum from the outside and the washing operation can be observed by a user. Especially this implementation is particularly advantageous because the advantages of a conventional implementation are thus also still given and thus the laundry drum can further be inspected based on need and depending on situation even with closed door, however, on the other hand, if this is also desired, the look into the laundry drum is denied.

By such a configuration, the optical characteristic of the door is changed. It is improved to the effect that unrestricted look through the window is virtually not permanently given. In this context, the coating reduces this translucency characteristic of the window. On the other hand, by such a coating on the specified component of the door, namely the
window, optical adaptation of the door to the surrounding components, namely the housing, is also achieved. Thereby, the door with its window also is no longer perceived as such an exposed component, and thereby a more uniform and smoother optical impression also arises. In particular, the window of the door is also covered by this coating to a certain extent, and a more uniform optical impression of the household appliance is thereby achieved.

Preferably, it is provided that the coating has at least one metallic layer. By this configuration, it is achieved that the window no longer appears as such as a glass panel or glass-like material in unrestricted manner, but a metallic impression is optically perceivably configured in this respect. It can also be provided that the coating has at least a dielectric layer.

For example, a color layer can be realized, in which an individual coloration and thus specific perceptibility is achieved. This can in particular be such a color configuration, which corresponds to the color configuration of the adjacent housing.

It can be provided that the coating for example has a ceramic color layer. It can also be a support layer for a further at least metallic layer. By this configuration, the coating can also be more stably applied to the at least translucent material of the window, for example also be burnt in.

The metallic layer can for example have Cr, Ag, Cu, Au, Al or Sn, wherein this specific enumeration of metallic elements is not to be understood as conclusive.

Besides the already mentioned metallic elements, the metallic layer, if it is formed in the coating, can also have at least one of the elements Ni, Ti, Zn, Zr, Pt.

In particularly advantageous manner, it is provided that the coating is applied by means of a PVD (physical vapor deposition) method. In particular, by a PVD method, the application of the coating with respect to the desired local position and/or the layer thickness and/or the desired material composition is particularly precisely achieved and an intended and permanently secure application of the coating on the window is also allowed.

Preferably, the coating is applied by PVD magnetron sputtering.

It can also be provided that besides the already mentioned possible application of the coating by a PVD method, another type of application is provided, which also generates a physical bond of the coating to the window. For example, here, dip coating or roller coating or spray coating or CVD (chemical vapor deposition) or vacuum sputtering can also be effected.

For example, the color layer can be an epoxy color layer.

Preferably, it is provided that the coating is formed at least on the inside and there it is formed in acid-proof and/or lye-proof manner. In this configuration, thus, the coating enters in contact with the wash liquor and the pieces of laundry, whereby this specification of acid-proofness and/or lye-proofness is particularly advantageous to be able to maintain the coating in long-lasting manner. This coating on the inside is preferably also water-resistant and scratch-resistant such that abrasion does not occur even upon hitting or rubbing of pieces of laundry.

Advantageously, the coating is also formed in dust-repellent manner and/or has hydrophobic characteristics. Thereby, the adhesion of dust is at least considerably reduced.

This configuration is individually allowed in many respects by specifically forming the number of the layers on the inside and/or the layer thicknesses of the layers on the inside and/or the material compositions of the layers on the inside.

In an advantageous implementation, it is provided that the coating is formed at least on the outside of the window and has less than three layers, in particular only one layer. Since the resistances mentioned above are here not required and preferably only the scratch-resistance is realized, with regard to the layer structure, a considerably simpler coating can be realized, which preferably has only one layer. The window can be of glass or of a material similar to glass. Moreover, the coating can also be individually structured such that an individual appearance can also be produced in this respect.

Preferably, it is provided that an outside of the housing adjoining the door is coated with the coating on the window. This means that at least the adjacent outside of the housing is also coated with this same coating besides the application of the coating on the window.

In particular in a configuration of the coating as a PVD coating, which thus is applied to the window by a PVD method, depending on the materials of the coating and/or the layer thickness and/or the layer number, an individual adjustment of the process parameters of the PVD method can be effected to then also obtain the desired optical and mechanical characteristics of the coating.

By the invention, it is also achieved that for a plurality of different household appliances, which are to be differently configured with regard to their optical characteristics, a same door with a same window can be used, which is then individually optically configured by different coatings, and therefore different optical characteristics with regard to the light transmittance through the window can also be produced. By such a configuration and thus in particular considered with regard to the door and the provision of the possibility of an identical component use, the production costs for variants of household appliances can also be reduced.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone, without departing from the scope of the invention. Thus, implementations are also to be considered as encompassed and disclosed by the invention, which are not explicitly shown in the figures and explained, but arise from and can be generated by separated feature combinations from the explained implementations.

Below, embodiments of the invention are explained in more detail based on schematic drawings. There show:
- fig. 1: a perspective illustration of an embodiment of a household appliance according to the invention for caring pieces of laundry; and
- fig. 2: a simplified schematic sectional illustration through an embodiment of a door of the household appliance according to fig. 1.

In the figures, identical or functionally identical elements are provided with the same reference characters.

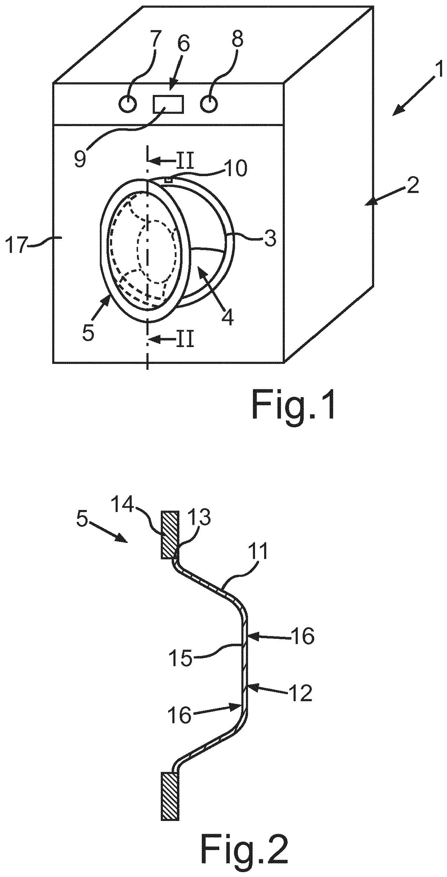

In fig. 1, in a simplified schematic illustration, a household appliance 1 for caring pieces of laundry is formed, which can for example be a washing machine or a washer-dryer. The household appliance 1 includes a housing 2, in which a laundry drum 3 is rotatably supported. The laundry drum 3 has an opening 4 on the front side, through which pieces of laundry can be introduced into the drum 3 or be removed from the laundry drum 3. This opening 4 is closable by a door 5, which is pivotably disposed on the housing 2.

Moreover, the household appliance 1 includes a control device 6 having control elements 7 and 8 as well as a display unit 9, to be merely exemplarily understood in position and configuration.

Moreover, the household appliance 1 includes at least one light source 10, which also is to be merely exemplarily and symbolically understood with regard to its number and local arrangement. The at least one light source 10 can be disposed in the interior of the housing 2 outside of the laundry drum 3. It can be disposed such that it illuminates the door 5 from inside and for example radiates on an inside 11 (fig. 2) of a window 12 of the door 5. However, it can also be provided that the light source 10 is disposed such that it couples in light via a narrow lateral edge 13, as is indicated in the sectional illustration of the door 5 in fig. 2, and thus the light is then coupled into the interior of the window 12. The door 5, as it is shown in a sectional illustration along the sectional line II-II in fig. 1 and is to be merely symbolically understood, preferably also includes an annular frame 14 besides the window 12.

It can be provided that a coating 16 is applied on the inside 11 or an outside 15 of the window 12 facing away from the laundry drum 3, which is formed of glass or a glass-like material and is in particular formed at least translucent. The coating 16 is formed such that the translucency of the window 12 in the non-illuminated state of the window 12 is reduced compared to a configuration without this coating 16. Preferably, the coating 16 is applied by a PVD method. The coating 16 can have at least a metallic layer and/or at least a dielectric layer.

Preferably, the coating 16 is applied to the inside 11 and/or the outside 15 on the full surface. The coating 16 is formed such that the window 12 is opaque in the viewing direction to the outside 15 with the light source 10 turned off and thus it cannot be looked through the window 12 from the outside upon non-illumination of the light source 10.

In particular, it is provided that the window 12 with the coating 16 is transparent with the viewing direction to the outside 15 with the light source 10 turned on. If the coating 16 is applied to the outside 15, thus, it is there preferably formed with a low layer number, preferably as a single layer. If the coating 16 is formed on the inside 11, thus, it is preferably formed as a multi-layer structure, wherein the coating 16 is then preferably at least formed in acid-proof and/or lye-proof and/or water-insoluble and/or scratch-resistant manner.

### List of reference characters

- 1: Household appliance
- 2: housing
- 3: laundry drum
- 4: opening
- 5: door
- 6: control device
- 7, 8: control elements
- 9: display unit
- 10: light source
- 11: inside
- 12: window
- 13: lateral edge
- 14: frame
- 15: outside
- 16: coating

## Claims

1. Household appliance (1) for caring pieces of laundry, comprising a housing (2), in which a laundry drum (3) is rotatably supported, wherein the laundry drum (3) has an opening (4), through which the pieces of laundry can be introduced into the laundry drum (3) or can be removed from the laundry drum (3), comprising a door (5), which is disposed pivotably on the housing (2) and for closing the opening (4), wherein the door (5) has an at least translucent window (12), and comprising at least one light source (10), by means of which the window (12) can be illuminated on the inside, **characterized in that** a coating (16) is applied on an outside (15) of the window (12) facing away from the laundry drum (3) and/or on an inside (11) of the window (12) facing the laundry drum (3), wherein the translucency of the window (12) is reduced at least in a non-illuminated state of the window (12) by the coating (16), wherein the window (12) with the coating (16) is opaque with viewing direction to the outside (15) of the window (12) and from an outside of the laundry drum (3) with the light source (10) turned off, and wherein the window (12) with the coating (16) is transparent with viewing direction to the outside (15) of the window (12) and from an outside of the laundry drum (3) with the light source (10) turned on.

2. Household appliance (1) according to claim 1, **characterized in that** the coating (16) has at least a metallic layer.

3. Household appliance (1) according to any one of the preceding claims, **characterized in that** the coating (16) is formed at least on the inside (11) and is formed there in acid-proof and/or lye-proof and/or scratch-resistant and/or water-insoluble and/or dust repellant manner.

4. Household appliance (1) according to any one of the preceding claims, **characterized in that** the coating (16) is formed at least on the outside (15) and comprises less than three layers, in particular only one layer.

5. Household appliance (1) according to any one of the preceding claims, **characterized in that** an outside (17) of the housing (2) adjoining the door (5) is coated with a corresponding coating (16) as it is formed on the window (12).

6. Household appliance (1) according to any one of the preceding claims, **characterized in that** the coating (16) comprises at least a dielectric layer.

## Patentansprüche

1. Haushaltsgerät (1) zum Pflegen von Wäschestücken mit einem Gehäuse (2), in dem eine Wäschetrommel (3) drehbar gelagert ist, wobei die Wäschetrommel (3) eine Öffnung (4) aufweist, durch die die Wäschestücke in die Wäschetrommel (3) hineingelegt oder aus der Wäschetrommel (3) herausgenommen werden können, mit einer Tür (5) zum Schließen der Öffnung (4), die schwenkbar an dem Gehäuse (2) angeordnet ist, wobei die Tür (5) ein zumindest lichtdurchlässiges Fenster (12) aufweist und mindestens eine Lichtquelle (10) umfasst, mit deren Hilfe das Fenster (12) von innen beleuchtet werden kann, **dadurch gekennzeichnet, dass** auf eine Außenseite (15) des Fensters (12), die von der Wäschetrommel (3) weg weist, und/oder auf eine Innenseite (11) des Fensters (12), die zur Wäschetrommel (3) weist, eine Beschichtung (16) aufgebracht ist, wobei sich die Lichtdurchlässigkeit des Fensters (12) zumindest im nicht beleuchteten Zustand des Fensters (12) durch die Beschichtung (16) verringert, wobei das Fenster (12) mit der Beschichtung (16) bei ausgeschalteter Lichtquelle (10) in Blickrichtung zur Außenseite (15) des Fensters (12) und von einer Außenseite der Wäschetrommel (3) undurchsichtig und bei eingeschalteter Lichtquelle (10) in Blickrichtung zur Außenseite (15) des Fensters (12) und von einer Außenseite der Wäschetrommel (3) durchsichtig ist.

2. Haushaltsgerät (1) nach Anspruch 1, **dadurch gekennzeichnet, dass** die Beschichtung (16) zumindest eine Metallschicht aufweist.

3. Haushaltsgerät (1) nach einem der vorhergehenden Ansprüche, **dadurch gekennzeichnet, dass** die Beschichtung (16) zumindest auf der Innenseite (11) und dort auf säurebeständige und/oder laugenbeständige und/oder kratzfeste und/oder wasserunlösliche und/oder schmutzabweisende Weise ausgebildet ist.

4. Haushaltsgerät (1) nach einem der vorhergehenden Ansprüche, **dadurch gekennzeichnet, dass** die Beschichtung (16) zumindest auf der Außenseite (15) ausgebildet ist und weniger als drei Schichten, insbesondere nur eine Schicht umfasst.

5. Haushaltsgerät (1) nach einem der vorhergehenden Ansprüche, **dadurch gekennzeichnet, dass** eine an die Tür (5) anschließende Außenseite (17) des Gehäuses (2) mit einer der auf dem Fenster (12) gleichenden Beschichtung (16) beschichtet ist.

6. Haushaltsgerät (1) nach einem der vorhergehenden Ansprüche, **dadurch gekennzeichnet, dass** die Beschichtung (16) zumindest eine dielektrische Schicht umfasst.

## Revendications

1. Appareil électroménager (1) destiné à l'entretien d'articles de linge, comprenant un corps (2), dans lequel un tambour à linge (3) est supporté à rotation, dans lequel le tambour à linge (3) comporte une ouverture (4) à travers laquelle les articles de linge peuvent être introduits dans le tambour à linge (3) ou peuvent être retirés du tambour à linge (3), comprenant une porte (5) disposée à pivotement sur le corps (2) et servant à fermer l'ouverture (4), dans lequel la porte (5) comporte une fenêtre (12) au moins translucide, et comprenant au moins une source de lumière (10) au moyen de laquelle la fenêtre (12) peut être éclairée à l'intérieur, **caractérisé en ce qu'**un revêtement (16) est appliqué sur l'extérieur (15) de la fenêtre (12) à l'opposé du tambour à linge (3) et/ou sur l'intérieur (11) de la fenêtre (12) faisant face au tambour à linge (3), dans lequel le caractère translucide de la fenêtre (12) est réduit au moins à un état non éclairé de la fenêtre (12) par le revêtement (16), dans lequel la fenêtre (12) avec le revêtement (16) est opaque avec sens de vue vers l'extérieur (15) de la fenêtre (12) et depuis l'extérieur du tambour à linge (3) lorsque la source de lumière (10) est éteinte, et dans lequel la fenêtre (12) avec le revêtement (16) est transparent avec sens de vue vers l'extérieur (15) de la fenêtre (12) et depuis l'extérieur du tambour à linge (3) lorsque la source de lumière (10) est allumée.

2. Appareil électroménager (1) selon la revendication 1, **caractérisé en ce que** le revêtement (16) comporte au moins une couche métallique.

3. Appareil électroménager (1) selon l'une quelconque des revendications précédentes, **caractérisé en ce que** le revêtement (16) est formé au moins sur l'intérieur (11) et y est formé de manière à être étanche aux acides et/ou étanche à la lessive et/ou résistant aux griffes et/ou insoluble à l'eau et/ou de manière à repousser les poussières.

4. Appareil électroménager (1) selon l'une quelconque des revendications précédentes, **caractérisé en ce que** le revêtement (16) est formé au moins sur l'extérieur (15) et comprend moins de trois couches, en particulier une seule couche.

5. Appareil électroménager (1) selon l'une quelconque des revendications précédentes, **caractérisé en ce que** l'extérieur (17) du corps (2) contigu à la porte (5) est revêtu d'un revêtement (16) correspondant tel qu'il est formé sur la fenêtre (12).

6. Appareil électroménager (1) selon l'une quelconque des revendications précédentes, **caractérisé en ce que** le revêtement (16) comprend au moins une couche diélectrique.
